# EUROPÄISCHE PATENTANMELDUNG

(11) **EP 2 750 340 A1**
(43) Veröffentlichungstag der Anmeldung: **02.07.2014**
(21) Anmeldenummer: 12199671.4
(22) Anmeldetag: 28.12.2012
(51) Int. Cl.: H04L 12/703, H04L 12/751, H04L 12/753

(54) **Verfahren zur Nachrichtenübermittlung in einem redundant betreibbaren industriellen Kommunikationsnetz und Netzinfrastrukturgerät**

(71) Anmelder: Siemens Aktiengesellschaft, 80333 München (DE)
(72) Erfinder: Götz, Franz-Josef, 91180 Heideck (DE); Kießling, Marcel, 90556 Cadolzburg (DE); Nguyen, An Ninh, 90762 Fürth (DE); Yu, Jiazheng, 90459 Nürnberg (DE)

(57) **Zusammenfassung**

Zur Nachrichtenübermittlung in einem redundant betreibbaren industriellen Kommunikationsnetz, in dem Nachrichten entsprechend einem Spannbaum-Protokoll übermittelt werden, tauschen Netzknoten des Kommunikationsnetzes zugeordnete Kommunikationsgeräte zur Bildung einer Baumtopologie untereinander Spannbaum-Protokoll-Nachrichten aus. Anhand dieser Spannbaum-Protokoll-Nachrichten wird ein Wurzel-Netzknoten als Basiselement einer Baumtopologie durch die den Netzknoten zugeordneten Kommunikationsgeräte ermittelt. Zusätzlich tauschen die Kommunikationsgeräte zur Überwachung von Verbindungszuständen zwischen Netzknoten bzw. zur Erfassung benachbarter Netzknoten Verbindungsüberwachungsnachrichten aus. Anhand der Verbindungsüberwachungsnachrichten bauen die Kommunikationsgeräte jeweils eine Topologie-Datenbank mit im Kommunikationsnetz verfügbaren Verbindungen auf. Außerdem schalten die Kommunikationsgeräte anhand in der Topologie-Datenbank gespeicherter Informationen ihre für einen Aufbau der Baumtopologie zu verwendenden Anschlüsse in einen weiterleitenden Zustand.

## Beschreibung

Üblicherweise umfaßt ein industrielles Automatisierungssystem eine Vielzahl von industriellen Automatisierungsgeräten, die über ein industrielles Kommunikationsnetz miteinander vernetzt sind und im Rahmen einer Fertigungs- oder Prozeßautomatisierung zur Steuerung oder Regelung von Anlagen, Maschinen bzw. Geräten dienen. Aufgrund zeitkritischer Rahmenbedingungen in technischen Systemen, die mittels industrieller Automatisierungsgeräte automatisiert sind, werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Äußerst problematisch sind Unterbrechungen von Kommunikationsverbindungen zwischen Rechnereinheiten eines industriellen Automatisierungssystems oder industriellen Automatisierungsgeräten, da dies neben einem Informationsverlust beispielsweise zu einer unerwünschten oder unnötigen Wiederholung einer Übermittlung einer Dienstanforderung führen kann. Hierdurch wird eine zusätzliche Auslastung von Kommunikationsverbindungen des industriellen Automatisierungssystems verursacht, was zu weiteren Systemstörungen oder -fehlern führen kann. Darüber hinaus können nicht oder nicht vollständig übermittelte Nachrichten beispielsweise einen Übergang oder Verbleib eines industriellen Automatisierungssystems in einen sicheren Betriebszustand verhindern. Im ungünstigsten Fall kann es zu einem Ausfall einer kompletten Produktionsanlage und zu einem kostspieligen Produktionsstillstand kommen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy, Parallel Redundancy Protocol oder (Rapid) Spanning Tree Protocol, für hochverfügbare, redundant betreibbare in industriellen Kommunikationsnetze entwickelt worden. Durch das in IEEE 802.1D definierte Spanning Tree Protocol (STP) kann eine schleifenfreie Netztopologie sichergestellt werden, indem zu Schleifen führende Mehrfachverbindungen identifiziert werden und eine Netztopologie durch eine Deaktivierung ausgewählter redundanter Verbindungen in eine Baumtopologie überführt wird. Bei Ausfall einer Verbindung oder eines Netzknotens erfolgt eine Netzrekonfiguration durch eine Ermittlung einer neuen Baumtopologie unter Berücksichtigung ausgefallener bzw. nicht verfügbarer Verbindungen oder Netzknoten. Hierzu tauschen die Netzknoten untereinander als Bridge Protocol Data Units (BPDU) bezeichnete Konfigurationsnachrichten mit Topologieinformationen aus. Das Rapid Spanning Tree Protocol (RSTP) stellt eine Weiterentwicklung des Spanning Tree Protocol (STP) dar und ist in IEEE 802.1D-2004 definiert. Während beim Spanning Tree Protocol (STP) bei Ausfall einer Netzkomponente noch sämtliche Verbindungen unterbrochen werden, bis eine neue Baumtopologie ermittelt ist, fallen beim Rapid Spanning Tree Protocol (RSTP) nur die Verbindungen aus, die von einer ausgefallenen Netzkomponente direkt betroffen sind.

Aus WO 2008/119649 A1 ist ein Verfahren zum Rekonfigurieren eines paketvermittelten Kommunikationsnetzes bekannt, das ein erstes Teilnetz und ein zweites Teilnetz umfaßt. Während im ersten Teilnetz ein erstes Netzprotokoll verwendet wird, wird im zweiten Teilnetz ein vom ersten Netzprotokoll verschiedenes zweites Netzprotokoll verwendet. Beide Teilnetze sind durch wenigstens drei redundante Datenlinks miteinander verbunden, von denen jeweils nur einer zum Nutzdatenaustausch aktiviert ist. Dabei ist ein Master-Datenlink voreingestellt aktiviert, während mindestens zwei Slave-Datenlinks voreingestellt inaktiviert sind. Durch eine mit dem Master-Datenlink verbundene Master-Brücke des zweiten Teilnetzes wird ein Ausfall des Master-Datenlinks oder eines Slave-Datenlinks überwacht. Bei einem solchen Ausfall generiert die Master-Brücke ein erstes Datenpaket und überträgt dies an eine mit einem Slave-Datenlink verbundene Slave-Brücke des zweiten Teilnetzes. Die Slave-Brücke wird gemäß einer vorgebbaren Auswahlregel durch die Master-Brücke ausgewählt. Anschließend wird das erste Datenpaket durch die gewählte Slave-Brücke verarbeitet. Das erste Datenpaket umfaßt logische Informationen, anhand derer eine zumindest teilweise Ausführung des ersten Netzprotokolls auf einem mit dem Slave-Datenlink verbundenen Port der Slave-Brücke und eine Aktivierung des Slave-Datenlinks durch das auf dem Port der Slave-Brücke ausgeführte erste Netzprotokoll erfolgt.

In EP 2 343 857 A1 ist ein Netzknoten für ein Kommunikationsnetz beschrieben, das ein erstes Teilnetz und ein mit diesem verbundenes zweites Teilnetz umfaßt. Während im ersten Teilnetz ein Spannbaum-Protokoll verwendet wird, wird im zweiten Teilnetz ein sich vom Protokoll des ersten Teilnetzes unterscheidendes zweites Protokoll verwendet. Der Netzknoten ist als ein Element für das zweite Teilnetz eingerichtet und zur Kommunikation innerhalb des zweiten Teilnetzes ausgebildet. Darüber hinaus ist der Netzknoten mittels einer Spannbaum-Funktionalität als ein Spannbaum-Hauptknoten zur Überwachung und Steuerung des zweiten Teilnetzes ausgebildet und eingerichtet. Damit kann das zweite Teilnetz vom im ersten Teilnetz verwendeten Spannbaum-Protokoll als ein virtueller Netzknoten behandelt werden, indem der Netzknoten als Spannbaum-Hauptknoten für andere Netzknoten des zweiten Teilnetzes eine Spannbaum-Protokoll-Anwendung vornimmt.

Aus WO 2010/105828 A1 ist ein Verfahren zum Betreiben eines Kommunikationsnetzes mit Redudanz-Eigenschaften bekannt, das eine Ring-Netztopologie aufweist. Innerhalb des Kommunikationsnetzes sind Kommunikationsgeräte mit ihren Datenports über Datenleitungen miteinander verbunden und tauschen auf Basis von Kommunikationsprotokollen Steuerungsdaten sowie Nutzdaten über die Datenleitungen aus. Um ein endloses Kreisen von Nachrichten in Maschen des Kommunikationsnetzes zu vermeiden, wird mittels der Kommunikationsprotokolle eine Übermittlung von Nachrichten über ausgewählte Datenports einzelner Kommunikationsgeräte mit Ausnahme von Nachrichten zur Steuerung bzw. Überwachung von Medienredundanz unterbunden. Innerhalb des Kommunikationsnetzes werden zwei unterschiedliche Kommunikationsprotokolle parallel zueinander in den Kommunikationsgeräten angewendet. Eine parallele Anwendung der unterschiedliche Kommunikationsprotokolle wird beispielsweise dadurch erzielt, eine Kontrolle über zu blockierende Datenports einem einzelnen Kommunikationsprotokoll zugewiesen wird. Alternativ dazu können für die Kommunikationsprotokolle derart Parameter gewählt werden, daß durch ein erstes Kommunikationsprotokoll keine Verbindungen blockiert werden, die entsprechend einem zweiten Kommunikationsprotokoll als aktiv gelten.

In der älteren europäischen Patentanmeldung mit dem Anmeldeaktenzeichen 12178677.6 ist ein Verfahren zur Nachrichtenübermittlung in einem redundant betreibbaren Kommunikationsnetz beschrieben, bei dem in einem ersten Teilnetz Nachrichten entsprechend einem Spannbaum-Protokoll übermittelt werden. Zur Bildung einer Baumtopologie tauschen Netzknoten des ersten Teilnetzes zugeordnete Kommunikationsgeräte untereinander Nachrichten mit Topologieinformationen aus. Im zweiten Teilnetz werden Nachrichten entsprechend einem Parallel- oder Ringredundanz-Protokoll übermittelt. Zur Verkürzung von Rekonfigurationszeiten im ersten Teilnetz wird als Wurzel-Netzknoten des ersten Teilnetzes ein virtueller Netzknoten konfiguriert, der über jeweils eine virtuelle nicht durch einen Fehler unterbrechbare Verbindung mit sämtlichen Netzknoten des zweiten Teilnetzes verbunden ist.

Der vorliegenden Erfindung liegt die Aufgabe zugrunde, ein Verfahren zur Nachrichtenübermittlung in einem redundant betreibbaren industriellen Kommunikationsnetz anzugeben, das bei Verwendung eines Spannbaum-Protokolls im Kommunikationsnetz eine schnelle Netz-Rekonfiguration in einem Fehlerfall ermöglicht, sowie ein zur Durchführung des Verfahrens geeignetes Gerät zu schaffen.

Diese Aufgabe wird erfindungsgemäß durch ein Verfahren mit den in Anspruch 1 angegebenen Merkmalen sowie durch ein Netzinfrastrukturgerät mit den in Anspruch 12 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden Nachrichten in einem redundant betreibbaren industriellen Kommunikationsnetz entsprechend einem Spannbaum-Protokoll übermittelt. Das Spannbaum-Protokoll kann beispielsweise das Rapid Spanning Tree Protocol oder das Multiple Spanning Tree Protocol sein. Netzknoten des Kommunikationsnetzes zugeordnete Kommunikationsgeräte, wie beispielsweise Switches oder Bridges, tauschen zur Bildung einer Baumtopologie untereinander Spannbaum-Protokoll-Nachrichten aus, anhand der ein Wurzel-Netzknoten als Basiselement einer Baumtopologie durch die den Netzknoten zugeordneten Kommunikationsgeräte ermittelt wird. Die Spannbaum-Protokoll-Nachrichten sind vorzugsweise Bridge Protocol Data Units bzw. können jeweils einen Port Priority Vector umfassen, der unter den Netzknoten des industriellen Kommunikationsnetzes zugeordneten Kommunikationsgeräten ausgetauscht und abgeglichen wird. Innerhalb der Baumtopologie werden vom Wurzel-Netzknoten ausgehende schleifenfreie Verbindungen anhand einer Ermittlung minimaler Pfadkosten zwischen dem Wurzel-Netzknoten und den übrigen Netzknoten aufgebaut.

Darüber hinaus tauschen die Kommunikationsgeräte zur Überwachung von Verbindungszuständen zwischen Netzknoten bzw. zur Erfassung benachbarter Netzknoten erfindungsgemäß Verbindungsüberwachungsnachrichten aus. Vorzugsweise tauschen die Kommunikationsgeräte die Verbindungsüberwachungsnachrichten entsprechend einem als Intermediate System to Intermediate System Protocol (IS-IS) oder einem als Open Shortest Path First (OPSF) bezeichneten Protokoll aus. Anhand der Verbindungsüberwachungsnachrichten bauen die Kommunikationsgeräte jeweils eine Topologie-Datenbank mit im Kommunikationsnetz verfügbaren Verbindungen auf. Die Kommunikationsgeräte schalten anhand in der Topologie-Datenbank gespeicherter Informationen ihre für einen Aufbau der Baumtopologie zu verwendenden Anschlüsse in einen weiterleitenden Zustand. Aufgrund dessen kann eine Anwendung von bisher in RSTP- oder MSTP-Kommunikationsnetzen üblichen Proposal-Agreement-Mechanismen entfallen. Hierdurch wird eine schnelle Netz-Rekonfiguration nach einem Fehlerfall erzielt.

Entsprechend einer vorteilhaften Weiterbildung des erfindungsgemäßen Verfahrens schalten die Kommunikationsgeräte ihre für einen Aufbau der Baumtopologie zu verwendenden Anschlüsse anhand eines Abgleichs von Spannbaum-Protokoll-Nachrichten mit in der Topologie-Datenbank gespeicherten Informationen in einen weiterleitenden Zustand schalten. Bei den für einen Aufbau der Baumtopologie zu verwendenden Anschlüssen handelt es sich vorzugsweise um als Designated Ports bezeichnete Anschlüsse, die anhand eines Abgleichs von Spannbaum-Protokoll-Nachrichten mit in der Topologie-Datenbank gespeicherten Informationen in einen weiterleitenden Zustand geschaltet werden. Dieser weiterleitende Zustand entspricht beispielsweise einem als Forwarding State bezeichneten Zustand.

Ein Schalten der für einen Aufbau der Baumtopologie zu verwendenden Anschlüsse der Kommunikationsgeräte in einen weiterleitenden Zustand anhand eines Abgleichs von Spannbaum-Protokoll-Nachrichten mit in der Topologie-Datenbank gespeicherten Informationen erfolgt vorteilhafterweise alternativ bzw. anstelle zu einer ansonsten üblichen Bestätigung der Spannbaum-Protokoll-Nachrichten durch Kommunikationsgeräte an benachbarten Netzknoten. Entsprechend einer besonders bevorzugten Ausgestaltung des erfindungsgemäßen Verfahrens schalten Kommunikationsgeräte ihre für einen Aufbau der Baumtopologie zu verwendenden Anschlüsse anhand eines Abgleichs von Spannbaum-Protokoll-Nachrichten mit in der Topologie-Datenbank gespeicherten Informationen unter Umgehung eines als Listening State bzw. als Learning State bezeichneten Zustands bei positivem Abgleich direkt in einen weiterleitenden Zustand. Dies ermöglicht deutlich verkürzte Rekonfigurationszeiten nach einem Fehler oder einer Topologieänderung.

Das erfindungsgemäße Netzinfrastrukturgerät ist zur Durchführung eines Verfahrens entsprechend vorangehender Beschreibung ausgestaltet und umfaßt mehrere Anschlüsse für eine Verbindung mit innerhalb eines industriellen Kommunikationsnetzes miteinander verbundenen Netzinfrastruktur- oder Kommunikationsgeräten. Das Netzinfrastrukturgerät kann beispielsweise ein Router, ein Switch, eine Bridge oder ein Hub sein. Des weiteren ist ein die Anschlüsse miteinander verbindendes Koppelelement vorgesehen. Außerdem ist das Netzinfrastrukturgerät für eine Nachrichtenübermittlung entsprechend einem Spannbaum-Protokoll eingerichtet. Vorzugsweise ist das Spannbaum-Protokoll das Rapid Spanning Tree Protocol (RSTP) oder Multiple Spanning Tree Protocol (MSTP). Darüber hinaus ist das Netzinfrastrukturgerät für einen Austausch von Spannbaum-Protokoll-Nachrichten mit Netzinfrastrukturgeräten an benachbarten Netzknoten zur Bildung einer Baumtopologie eingerichtet. Dabei sind die Spannbaum-Protokoll-Nachrichten für eine Ermittlung eines Wurzel-Netzknotens als Basiselement einer Baumtopologie vorgesehen. Ferner ist das Netzinfrastrukturgerät für einen Aufbau innerhalb der Baumtopologie vom Wurzel-Netzknoten ausgehender schleifenfreier Verbindungen anhand einer Ermittlung minimaler Pfadkosten zwischen dem Wurzel-Netzknoten und den übrigen Netzknoten eingerichtet.

Zusätzlich ist das erfindungsgemäße Netzinfrastrukturgerät für einen Austausch von Verbindungsüberwachungsnachrichten zur Überwachung von Verbindungszuständen zwischen Netzknoten bzw. zur Erfassung benachbarter Netzknoten eingerichtet. Vorzugsweise ist das Netzinfrastrukturgerät dabei für einen Austausch von Verbindungsüberwachungsnachrichten entsprechend einem als Intermediate System to Intermediate System Protocol (IS-IS) oder einem als Open Shortest Path First (OPSF) bezeichneten Protokoll eingerichtet. Des weiteren ist das Netzinfrastrukturgerät für einen Aufbau einer Topologie-Datenbank mit im Kommunikationsnetz verfügbaren Verbindungen anhand der Verbindungsüberwachungsnachrichten eingerichtet. Darüber hinaus ist das Netzinfrastrukturgerät für ein Schalten zumindest eines für einen Aufbau der Baumtopologie zu verwendenden Anschlusses in einen weiterleitenden Zustand eingerichtet. Dabei erfolgt das Schalten in einen weiterleitenden Zustand anhand in der Topologie-Datenbank gespeicherter Informationen. Dies ermöglicht eine schnelle Netz-Rekonfiguration nach einem Fehlerfall oder einer Topologieänderung.

Bei einer vorteilhaften Weiterbildung des erfindungsgemäßen Netzinfrastrukturgeräts erfolgt das Schalten in einen weiterleitenden Zustand anhand eines Abgleichs von Spannbaum-Protokoll-Nachrichten mit in der Topologie-Datenbank gespeicherten Informationen. Entsprechend eine besonders bevorzugten Ausgestaltung ist das Netzinfrastrukturgerät für ein Schalten zumindest eines als Designated Port bezeichneten Anschlusses in einen weiterleitenden Zustand eingerichtet. Dabei erfolgt das Schalten in einen weiterleitenden Zustand anhand eines Abgleichs von Spannbaum-Protokoll-Nachrichten mit in der Topologie-Datenbank gespeicherten Informationen.

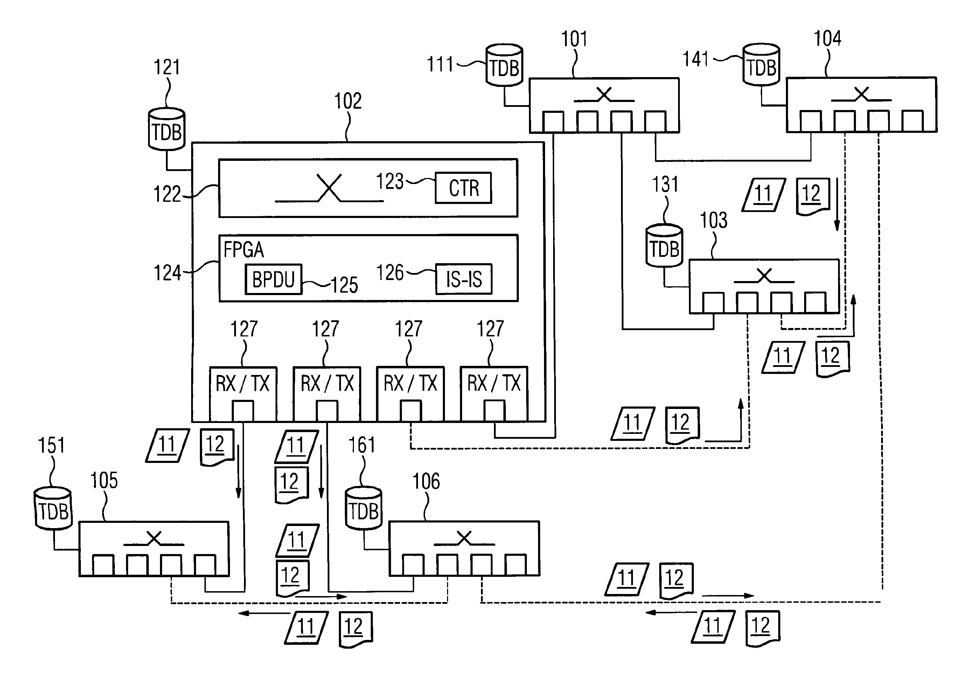

Die vorliegende Erfindung wird nachfolgend an einem Ausführungsbeispiel anhand der Zeichnung näher erläutert. Es zeigt die
- Figur: ein industrielles Kommunikationsnetz eines industriellen Automatisierungssystems mit mehreren Switches.

Das in der Figur dargestellte industrielle Kommunikationsnetz umfaßt mehrere Switches 101-106, an denen industrielle Automatisierungsgeräte zur Steuerung oder Regelung einer technischen Anlage oder eines technischen Prozesses angeschlossen werden können. Zu diesen industriellen Automatisierungsgeräten zählen beispielsweise Sensoren, Aktoren und speicherprogrammierbare Steuerungen. Nachfolgende Ausführungen sind nicht auf Switches als Netzinfrastrukturgeräte beschränkt, sondern gelten gleichermaßen beispielsweise auch für Router, Bridges und Hubs.

Die Switches 101-106 weisen einen grundsätzlich ähnlichen Aufbau und eine vergleichbare Funktionalität auf. Exemplarisch ist ein Switch 102 an einem Nachbar-Netzknoten eines Wurzel-Netzknotens detaillierter dargestellt. Der Switch 102 weist mehrere jeweils zumindest einen Anschluß umfassende Sende-/Empfangseinheiten 127 für Verbindungen mit an das industrielle Kommunikationsnetz angeschlossenen Netzinfrastruktur- oder Kommunikationsgeräten entsprechend einem Spannbaum-Protokoll auf. Beim Spannbaum-Protokoll handelt es sich vorzugsweise um das Rapid Spanning Tree Protocol (RSTP) oder das Multiple Spanning Tree Protocol (MSTP). Grundsätzlich jeder Switch 101-106 eine Rolle als Switch an einem Wurzel-Netzknoten wahrnehmen. Dies ist beispielsweise von Verfügbarkeit, Priorität bzw. einer dem jeweiligen Switch 101-106 zugeordneten MAC-Adresse abhängig.

Außerdem umfaßt der Switch 102 ein die Anschlüsse schaltbar miteinander verbindendes Koppelelement 122 mit einer zugeordneten Controller 123. Das Koppelelement 122 ist im vorliegenden Ausführungsbeispiel ein Hochgeschwindigkeitsbus, vorzugsweise ein Backplane Switch mit integriertem Controller. Alternativ hierzu kann das Koppelelement 122 grundsätzlich auch mittels eines Matrix-Schaltnetzes realisiert sein. Als Mittel zur Nachrichtenübermittlung innerhalb des industriellen Kommunikationsnetzes umfaßt der Switch 102 neben dem Koppelelement und den Sende-/Empfangseinheiten 127 eine Signalverarbeitungseinheit 124. Die Signalverarbeitungseinheit 124 ist vorzugsweise mittels eines Field Programmable Gate Arrays (FPGA) realisiert und umfaßt eine Protokoll-Verarbeitungseinheit 125 für Spannbaum-Protokoll-Nachrichten 11. Die Protokoll-Verarbeitungseinheit 125 ist für einen Austausch von Spannbaum-Protokoll-Nachrichten 11 mit Switches an benachbarten Netzknoten und für eine Ermittlung eines Wurzel-Netzknotens als Basiselement einer Baumtopologie ausgestaltet und eingerichtet.

Darüber hinaus dient die Protokoll-Verarbeitungseinheit 125 als Mittel für einen Aufbau innerhalb der Baumtopologie vom Wurzel-Netzknoten ausgehender schleifenfreier Verbindungen. Diese Verbindungen innerhalb der Baumtopologie sind durch minimale Pfadkosten zwischen dem Wurzel-Netzknoten und den übrigen Netzknoten gekennzeichnet, wobei die Pfadkosten zum Wurzel-Netzknoten durch die Switches 101-106 anhand der Spannbaum-Protokoll-Nachrichten 11 ermittelbar sind. Die Spannbaum-Protokoll-Nachrichten 11 sind im vorliegenden Ausführungsbeispiel Bridge Protocol Data Units (BPDU) und können jeweils einen Port Priority Vector umfassen, der unter den Netzknoten des industriellen Kommunikationsnetzes zugeordneten Switches 101-106 ausgetauscht und abgeglichen wird. In der Figur sind für einen Aufbau einer Baumtopologie aktive Verbindungen zwischen Switches 101-106 als durchgezogene Linien dargestellt, während zu Schleifen führende deaktivierte Verbindungen durch gestrichelte Linien repräsentiert werden.

Zusätzlich umfaßt die Protokoll-Verarbeitungseinheit 125 eine Speichereinheit für eine Speicherung von Angaben über einen Wurzel-Netzknoten und über Pfadkosten zum Wurzel-Netzknoten. Die in der Speichereinheit gespeicherten Angaben über einen Wurzel-Netzknoten umfassen vorzugsweise einen Identifikator des Switches am Wurzel-Netzknoten. Der Controller 123 des Koppelelements 122 ist im vorliegenden Ausführungsbeispiel für eine Steuerung einer Übermittlung von Spannbaum-Protokoll-Nachrichten 11, welche Angaben über den Wurzel-Netzknoten und die Pfadkosten zum Wurzel-Netzknoten umfassen, an Switches 101, 103, 105, 106 an benachbarten Netzknoten vorgesehen sowie dementsprechend ausgestaltet und eingerichtet.

Die Signalverarbeitungseinheit 124 des Switchs 102 umfaßt außerdem eine Überwachungseinheit 126, die für einen Austausch von Verbindungsüberwachungsnachrichten 12 zur Überwachung von Verbindungszuständen zwischen Netzknoten bzw. zur Erfassung benachbarter Netzknoten vorgesehen und dementsprechend ausgestaltet und eingerichtet ist. Im vorliegenden Ausführungsbeispiel tauschen die Switches 101-106 die Verbindungsüberwachungsnachrichten 12 entsprechend einem als Intermediate System to Intermediate System Protocol (IS-IS) aus. Grundsätzlich könnte hierfür auch ein als Open Shortest Path First (OPSF) bezeichnetes Protokoll verwendet werden. Die Überwachungseinheit 126 ist außerdem für einen Aufbau einer Topologie-Datenbank 121 mit im Kommunikationsnetz verfügbaren Verbindungen anhand der Verbindungsüberwachungsnachrichten 12 eingerichtet. Im vorliegenden Ausführungsbeispiel ist jedem Switch 101-106 eine solche Topologie-Datenbank 111, 121, 131, 141, 151, 161 zugeordnet.

Die Protokoll-Verarbeitungseinheit 125 und der Controller 123 des Koppelelements 122 sind dazu ausgestaltet und eingerichtet, zumindest einen für einen Aufbau der Baumtopologie zu verwendenden Anschluß anhand in der Topologie-Datenbank 121 gespeicherter Informationen in einen weiterleitenden Zustand zu schalten. Grundsätzlich können sämtliche Switches 101-106 ihre für einen Aufbau der Baumtopologie zu verwendenden Anschlüsse anhand eines Abgleichs von Spannbaum-Protokoll-Nachrichten 11 mit in der jeweiligen Topologie-Datenbank 111, 121, 131, 141, 151, 161 gespeicherten Informationen in einen weiterleitenden Zustand schalten. Bei diesen für einen Aufbau der Baumtopologie zu verwendenden Anschlüsse handelt es sich insbesondere um als Designated Ports bezeichneten Anschlüsse, die anhand eines Abgleichs von Spannbaum-Protokoll-Nachrichten 11 mit in der Topologie-Datenbank gespeicherten Informationen 111, 121, 131, 141, 151, 161 in einen weiterleitenden Zustand geschaltet werden. Der weiterleitende Zustand ist im vorliegenden Ausführungsbeispiel ein als Forwarding State bezeichneter Zustand.

Vorteilhafterweise schalten die Switches 101-106 ihre für einen Aufbau der Baumtopologie zu verwendenden Anschlüsse anhand eines Abgleichs von Spannbaum-Protokoll-Nachrichten mit in der Topologie-Datenbank gespeicherten Informationen anstelle einer bisher üblichen Bestätigung der Spannbaum-Protokoll-Nachrichten durch Switches an benachbarten Netzknoten (Proposal-Agreement-Verfahren) in einen weiterleitenden Zustand. Dies ermöglicht deutlich verkürzte Rekonfigurationszeiten nach Fehlern oder Topologieänderungen. Hierzu schalten die Switches 101-106 im vorliegenden Ausführungsbeispiel ihre Designated Ports bei positivem Abgleich direkt in den Forwarding State, und zwar unter Umgehung eines Listening State bzw. als Learning State. Dies ermöglicht eine weitere Verkürzung der Rekonfigurationszeiten.

## Patentansprüche

1. Verfahren zur Nachrichtenübermittlung in einem redundant betreibbaren industriellen Kommunikationsnetz, bei dem
- Nachrichten entsprechend einem Spannbaum-Protokoll übermittelt werden,
- Netzknoten des Kommunikationsnetzes zugeordnete Kommunikationsgeräte zur Bildung einer Baumtopologie untereinander Spannbaum-Protokoll-Nachrichten austauschen, anhand der ein Wurzel-Netzknoten als Basiselement einer Baumtopologie durch die den Netzknoten zugeordneten Kommunikationsgeräte ermittelt wird,
- innerhalb der Baumtopologie vom Wurzel-Netzknoten ausgehende schleifenfreie Verbindungen anhand einer Ermittlung minimaler Pfadkosten zwischen dem Wurzel-Netzknoten und den übrigen Netzknoten aufgebaut werden,
- die Kommunikationsgeräte zur Überwachung von Verbindungszuständen zwischen Netzknoten und/oder zur Erfassung benachbarter Netzknoten Verbindungsüberwachungsnachrichten austauschen,
- die Kommunikationsgeräte anhand der Verbindungsüberwachungsnachrichten jeweils eine Topologie-Datenbank mit im Kommunikationsnetz verfügbaren Verbindungen aufbauen,
- die Kommunikationsgeräte anhand in der Topologie-Datenbank gespeicherter Informationen ihre für einen Aufbau der Baumtopologie zu verwendenden Anschlüsse in einen weiterleitenden Zustand schalten.

2. Verfahren nach Anspruch 1,
bei dem die Kommunikationsgeräte ihre für einen Aufbau der Baumtopologie zu verwendenden Anschlüsse anhand eines Abgleichs von Spannbaum-Protokoll-Nachrichten mit in der Topologie-Datenbank gespeicherten Informationen in einen weiterleitenden Zustand schalten.

3. Verfahren nach Anspruch 2,
bei dem die Kommunikationsgeräte ihre als Designated Ports bezeichneten Anschlüsse anhand eines Abgleichs von Spannbaum-Protokoll-Nachrichten mit in der Topologie-Datenbank gespeicherten Informationen in einen weiterleitenden Zustand schalten.

4. Verfahren nach Anspruch 3,
bei dem die Kommunikationsgeräte ihre als Designated Ports bezeichneten Anschlüsse anhand eines Abgleichs von Spannbaum-Protokoll-Nachrichten mit in der Topologie-Datenbank gespeicherten Informationen in einen als Forwarding State bezeichneten Zustand schalten.

5. Verfahren nach einem der Ansprüche 1 bis 4,
bei dem die Kommunikationsgeräte ihre für einen Aufbau der Baumtopologie zu verwendenden Anschlüsse anhand eines Abgleichs von Spannbaum-Protokoll-Nachrichten mit in der Topologie-Datenbank gespeicherten Informationen alternativ zur einer Bestätigung der Spannbaum-Protokoll-Nachrichten durch Kommunikationsgeräte an benachbarten Netzknoten in einen weiterleitenden Zustand schalten.

6. Verfahren nach einem der Ansprüche 1 bis 5,
bei dem die Kommunikationsgeräte ihre für einen Aufbau der Baumtopologie zu verwendenden Anschlüsse anhand eines Abgleichs von Spannbaum-Protokoll-Nachrichten mit in der Topologie-Datenbank gespeicherten Informationen unter Umgehung eines als Listening State und/oder als Learning State bezeichneten Zustands bei positivem Abgleich direkt in einen weiterleitenden Zustand schalten.

7. Verfahren nach einem der Ansprüche 1 bis 6,
bei dem die Kommunikationsgeräte die Verbindungsüberwachungsnachrichten entsprechend einem als Intermediate System to Intermediate System Protocol (IS-IS) oder einem als Open Shortest Path First (OPSF) bezeichneten Protokoll austauschen.

8. Verfahren nach einem der Ansprüche 1 bis 12,
bei dem das Spannbaum-Protokoll das Rapid Spanning Tree Protocol oder Multiple Spanning Tree Protocol ist.

9. Verfahren nach Anspruch 8,
bei dem die Spannbaum-Protokoll-Nachrichten Bridge Protocol Data Units sind.

10. Verfahren nach Anspruch 8 oder 9,
bei dem die Spannbaum-Protokoll-Nachrichten jeweils einen Port Priority Vector umfassen, der unter den Netzknoten des industriellen Kommunikationsnetzes zugeordneten Kommunikationsgeräten ausgetauscht und abgeglichen wird.

11. Verfahren nach einem der Ansprüche 1 bis 15,
bei dem die den Netzknoten des industriellen Kommunikationsnetzes zugeordneten Kommunikationsgeräte Switches oder Bridges sind.

12. Netzinfrastrukturgerät zur Durchführung eines Verfahrens nach einem der Ansprüche 1 bis 11
- mit mehreren Anschlüssen für eine Verbindung mit innerhalb eines industriellen Kommunikationsnetzes miteinander verbundenen Netzinfrastruktur- oder Kommunikationsgeräten,
- mit einem die Anschlüsse miteinander verbindenden Koppelelement,
- wobei das Netzinfrastrukturgerät für eine Nachrichtenübermittlung entsprechend einem Spannbaum-Protokoll eingerichtet ist,
- wobei das Netzinfrastrukturgerät für einen Austausch von Spannbaum-Protokoll-Nachrichten mit Netzinfrastrukturgeräten an benachbarten Netzknoten zur Bildung einer Baumtopologie eingerichtet ist, wobei die Spannbaum-Protokoll-Nachrichten für eine Ermittlung eines Wurzel-Netzknotens als Basiselement einer Baumtopologie vorgesehen sind,
- wobei das Netzinfrastrukturgerät für einen Aufbau innerhalb der Baumtopologie vom Wurzel-Netzknoten ausgehender schleifenfreier Verbindungen anhand einer Ermittlung minimaler Pfadkosten zwischen dem Wurzel-Netzknoten und den übrigen Netzknoten eingerichtet ist,
- wobei das Netzinfrastrukturgerät für einen Austausch von Verbindungsüberwachungsnachrichten zur Überwachung von Verbindungszuständen zwischen Netzknoten und/oder zur Erfassung benachbarter Netzknoten eingerichtet ist,
- wobei das Netzinfrastrukturgerät für einen Aufbau einer Topologie-Datenbank mit im Kommunikationsnetz verfügbaren Verbindungen anhand der Verbindungsüberwachungsnachrichten eingerichtet ist,
- wobei das Netzinfrastrukturgerät für ein Schalten zumindest eines für einen Aufbau der Baumtopologie zu verwendenden Anschlusses in einen weiterleitenden Zustand eingerichtet ist, wobei das Schalten in einen weiterleitenden Zustand anhand in der Topologie-Datenbank gespeicherter Informationen erfolgt.

13. Netzinfrastrukturgerät nach Anspruch 12,
bei dem das Schalten in einen weiterleitenden Zustand anhand eines Abgleichs von Spannbaum-Protokoll-Nachrichten mit in der Topologie-Datenbank gespeicherten Informationen erfolgt.

14. Netzinfrastrukturgerät nach Anspruch 13,
bei dem das Netzinfrastrukturgerät für ein Schalten zumindest eines als Designated Port bezeichneten Anschlusses in einen weiterleitenden Zustand eingerichtet ist, wobei das Schalten in einen weiterleitenden Zustand anhand eines Abgleichs von Spannbaum-Protokoll-Nachrichten mit in der Topologie-Datenbank gespeicherten Informationen erfolgt.

15. Netzinfrastrukturgerät nach einem der Ansprüche 12 bis 14,
bei dem das Netzinfrastrukturgerät für einen Austausch von Verbindungsüberwachungsnachrichten entsprechend einem als Intermediate System to Intermediate System Protocol (IS-IS) oder einem als Open Shortest Path First (OPSF) bezeichneten Protokoll eingerichtet ist.

16. Netzinfrastrukturgerät nach einem der Ansprüche 12 bis 15,
bei dem das Spannbaum-Protokoll das Rapid Spanning Tree Protocol oder Multiple Spanning Tree Protocol ist.

17. Netzinfrastrukturgerät nach einem der Ansprüche 12 bis 16,
bei dem das Netzinfrastrukturgerät ein Router, ein Switch, eine Bridge oder ein Hub ist.
